# EUROPÄISCHE PATENTSCHRIFT

(11) **EP 0 987 705 B1**
(45) Veröffentlichungstag und Bekanntmachung des Hinweises auf die Patenterteilung: **14.08.2002**
(21) Anmeldenummer: 99118153.8
(22) Anmeldetag: 11.09.1999
(51) Int. Cl.: G11B 20/00, G11B 23/28

(54) **Kopierschutzverfahren**
Copy protection method
Méthode de protection contre la copie

(30) Priorität: 16.09.1998 DE 19842392
(43) Veröffentlichungstag der Anmeldung: 22.03.2000
(73) Patentinhaber: OK Media Disc Service GmbH & Co. KG, 24589 Nortorf (DE)
(72) Erfinder: Klahn, Stefan, Dr., 24558 Kaltenkirchen (DE); Buttenschön, Michael, 24589 Nortorf (DE); Sellmer, Dirk, 24146 Kiel (DE)
(74) Vertreter: Tönnies, Jan G.

(56) Entgegenhaltungen:
- WO-A-98/01852
- DE-A- 19 510 436
- DE-A- 19 602 804
- GB-A- 2 131 580

## Beschreibung

Die Erfindung betrifft ein Kopierschutzverfahren für ein mit einem von einem Rechner auszuführenden Programm beschriebenen Datenträger, insbesondere eine CD-ROM oder eine DVD-ROM.

Der Vertrieb von CD-ROM-Datenträgern, auf denen häufig aufwendige, nur unter hohen Kosten und Zeitaufwand zusammengestellte Daten und Programme vertrieben werden, wird durch sogenannte Raubkopien, mit denen 1 zu 1 der Inhalt de Datenträgers kopiert wird, stark gefährdet. Mit schon jetzt für den privaten Haushalt erschwinglichen Geräten lassen sich ohne großen Aufwand innerhalb kürzester Zeit die Daten auf sogenannte CD-R kopieren, die sich wie eine CD-Rom abspielen lassen.

Ziel eines Vertreibers ist es nun folglich, einen Kopierschutz zu verwenden, mit dem vom abspielenden Gerät (meist einem mit einem Rechner verbundenen sog. Laufwerk) originale Datenträger von kopierten Datenträgern unterschieden werden können.

Es ist bekannt, daß in einer Datei auf der CD-ROM einige Datenblöcke entweder durch das Ausschalten des Lasers während des Masterings für eine gewisse Zeit gar nicht geschrieben oder durch mechanische Zerstörung auf den galvanischen Folgeprodukten (Vater-Mutter- und Bruder-Matrize für die Herstellung der CD-ROM) unlesbar gemacht werden. Diese defekten Datenblöcke dienen dann zur Identifikation der Original-CD-ROM.

Zweckmäßigerweise werden Datenblöcke inmitten eines Datenfiles zerstört, so daß am Anfang und am Ende die Daten noch gelesen werden können. Dieser Fingerabdruck der CD-ROM kann mit kommerziellen CD beschreibenden Geräten, sogenannten CD-Brennern nicht kopiert werden und kann durch eine Überprüfung und zur Identifizierung der Original CD-ROM genutzt werden. Dieses Verfahren läßt allerdings zu, daß Raubkopierer unter einigem technischen Aufwand sich eine ebenfalls beschädigte Datei erzeugen, die unter Umständen von der Überprüfungssoftware nicht von der beschädigten Datei auf der Original-CD-ROM unterschieden werden kann.

Weiterhin ist aus der DE-A-19 602 804 ein Verfahren nach den Oberbegriff des Auspruchs 1 bekannt.

Aufgabe der Erfindung insgesamt ist es nun, ein Kopierschutzverfahren zu schaffen, das es auch unter dem Einsatz erheblicher technischer Mittel nicht möglich macht, das Überprüfungsprogramm zu täuschen.

Erfindungsgemäß wird diese Aufgabe durch ein Kopierschutzverfahren mit den Merkmalen des Hauptanspruches gelöst, das vorteilhafterweise keine neue Hardware beim Endnutzer erfordert. Die Unteransprüche geben vorteilhafte Ausführungsformen der Erfindung wieder.

Insbesondere hat das erfindungsgemäße Verfahren, bei dem Störstrukturen mechanisch oder bei der Herstellung des Masters aufgebracht werden, den Vorteil, daß diese Störungen nicht zur Unlesbarkeit der Daten führen. Beim Anfertigen einer Kopie wird daher ein bestimmter Dateninhalt gelesen und auf der Kopie, wie alle anderen gelesenen Daten auch abgelegt. Genau definierte Beschädigungen nach dem Verfahren haben jedoch zur Folge, daß beim Auslesen der originalen CD die ggf. fehlenden Daten oder die fehlerhaften Daten durch die in jedem CD-Rom Laufwerk vorhandene Datenkorrektur rekonstruiert werden müssen oder erst durch Wiederholung des Lesens verfügbar sind.

Diese Umstände bewirken, daß sich die Auslesedauer der Daten deutlich erhöht. Diese Erhöhung der Auslesedauer wird nun von einer Überprüfungssoftware ausgewertet und zur Identifikation der Original CD-ROM genutzt.

Immer dann, wenn beim Aufrufen bestimmter Bereiche des Datenträgers die Auslesedauer dieses Bereiches eine Mindestauslesedauer von beispielsweise 300 ms übersteigt, kann davon ausgegangen werden, daß eine Original CD-ROM vorliegt. Wenn jedoch diese Mindestauslesedauer nicht erreicht wird, und die Daten in den bestimmten Bereichen sich wie die Daten auf anderen Bereichen der CD-ROM gleich schnell auslesen lassen, kann die Überprüfungssoftware den Datenträger als Kopie identifizieren und entweder das Anwendungsprogramm abbrechen oder andere geeignete vorbestimmte Maßnahmen durchführen.

Als mechanische Störstrukturen werden beispielsweise kammartige Strukturen bei der in einem bestimmten Radius radiale Kratzer auf einer Matrize z. B. im definierten Winkelabstand von 11,75° eingeritzt werden, vorgeschlagen. Die Kratzer sollten unterschiedliche Länge von beispielsweise 0,8 bis 0,2 mm haben, damit schlechte CD-ROM-Laufwerke nicht durch zu massive Fehler abstürzen. Auf einer CD sind dann jeweils beim Auslesen von 3270068 Byte erhöhte Auslesezeiten von mindestens 150 ms zu erwarten.

Eine weitere Störstruktur zeichnet sich durch Gruppen von mindestens drei radialen Kratzern mit absteigender Länge (von 0,1 mm bis 0,2 mm) aus, die alle 1 bis 2 mm eingeritzt werden. Hiermit läßt sich eine Erhöhung der Auslesedauer um mindestens 200 ms im Vergleich zu unbeschädigten Bereichen erreichen.

Weiter wird vorgeschlagen, die Laserjustierung beim Beschreiben des Masters derart zu verändern, daß sie nicht mehr fokussiert oder nicht mehr auf dem vorgegebenen Spurabschnitt verläuft, sondern z.B. leicht exzentrisch. Damit läßt sich das CD-ROM Auslesesignal z. B. PushPull, I3, oder I11 stark bis dramatisch verschlechtern. Die Daten in diesen Bereichen können wiederum nur durch Nutzung der Datenkorrektur und wiederholtes Auslesen vom Lesegerät ausgewiesen werden. Dieses wiederum führt zu einer.deutlichen Erhöhung der Auslesedauer, die durch die Überprüfungssoftware ausgewertet und zur Identifikation als Original-CD-ROM genutzt wird. Ebenso könnten die Leistung des Lasers oder andere seine Wirkung definierende optische Werte manipuliert werden.

Weitere Merkmale und Vorteile des erfindungsgemäßen Verfahrens ergeben sich aus nachfolgender Beschreibung der Herstellung der Datenträger sowie einer näheren Beschreibung der Überprüfungssoftware.

Die Erfindung soll bei der Massenproduktion von Datenträgern, zur Zeit insbesondere CD-ROMs angewendet werden. Die Massenproduktion von CDs beginnt mit dem Mastering, bei dem in eine photoempfindliche Schicht mit einem Schreiblaser die ROM-Daten als sogenannte Pits geschrieben werden. Von dem Master wird galvanotechnisch ein "Vater" hergestellt, von dem wiederum ein galvanotechnisch eine "Mutter" und von der wiederum Matrizen gezogen werden. Sowohl der Vater als auch die Matrizen dienen dann im Spritzgießverfahren als Matrize zur Massenreplikation der CD-ROMs. Auf der Oberfläche des Vaters durch Katzer oder durch andersartig eingebrachte Pits vorhandenen Störstrukturen werden so ohne zusätzlichen Aufwand auf die CD-ROMs übertragen. Selbstverständlich kann das Verfahren auch direkt auf den CD-ROMs selbst aufgebracht werden, wenn beispielsweise im nachhinein bestimmte CD-ROM kopiergeschützt werden soll.

Die Überprüfungsroutine wird dabei in zweckmäßiger Weise auf dem zu schützenden Datenträger in einer Anwendung integriert, kann aber auch als ausführbare Datei (*.EXE) oder als Direct-Link-Libary (*.DLL) vorgesehen werden. Die Routine wird dabei zunächst prüfen, ob eine zu erwartende zu prüfende Datei auf der CD-ROM existent ist und ob diese am Anfang und am Ende gelesen werden kann. Während des Lesevorganges dieser Datei wird die Auslesegeschwindigkeit überwacht und festgestellt, ob sie sich in bestimmten Sektoren der Datei verringert und/oder ob es Auslesefehler gibt.

In einer alternativen Ausführungsform kann zusätzlich noch eine in einem anderen Bereich des Datenträgers vorhandene Datei gelesen werden, um festzustellen, welche Lesezeit für normale Daten üblich ist. Nach der Prüfung der Datei wird die Überprüfungsroutine den Datenträger entweder als Original-CD identifizieren und die Anwendung freigeben oder den Datenträger als Kopie (z. B. als CD-R) erkennen und die Anwendung abbrechen.

Vorteilhafter Ort für die Erzeugung der Kratzer ist, diese auf der Mutter zu erzeugen, damit die kosmetischen Störungen auf der CD, auf der sie dann ebenfalls als Vertiefungen auftauchen, minimal sind.

Weiter wird vorgeschlagen, größere Mengen an Daten aus einer Mehrzahl von Segmenten zu lesen, um den Lesepuffer der CD-ROM-Laufwerke zu füllen und es wird vorgeschlagen, die Software die Daten rückwärts lesen zu lassen, um stabilere Auslesedauern zu erhalten.

Weiter wird vorgeschlagen, gleichzeitig einige Datenblöcke unlesbar und andere Datenblöcke schlecht lesbar zu machen. Damit kann der Datenträger zunächst gar nicht kopiert werden. Falls dies aber doch gelingt, wird die Kopie aufgrund der weitergehenden Maßnahmen durch Auswertung der Lesegeschwindigkeit als Kopie identifiziert.

## Patentansprüche

1. Kopierschutzverfahren für einen mit einem von einem Rechner auszuführenden Programm beschriebenen Datenträger insbesondere eine CD-ROM oder eine DVD-ROM, mit folgenden Schritten
- Einprägen von Störstrukturen in einem bestimmten Bereich des Datenträgers, und
- Vorsehen einer Überprüfungsroutine in das auf den Datenträger aufgebrachte Programm, die
-- ein Aufrufen des bestimmten Bereichs auf dem Datenträger bewirkt,
**dadurch gekennzeichnet, daß**
die Störstrukturen korrigierbar sind und eine Erhöhung der Lesedauer bewirken und die Überprüfungsroutine
-- die Auslesedauer dieses Bereichs erfaßt,
-- diese Auslesedauer mit einer vorbestimmten Mindestauslesedauer vergleicht und
-- das Programm abbricht, wenn die Auslesedauer die Mindestauslesedauer nicht erreicht.

2. Kopierschutzverfahren nach Anspruch 1, **dadurch gekennzeichnet, daß** auf einer Matrize des Datenträgers radiale, die Fehlerkorrektur eines Auslesegerätes zum Rekonstruieren der Daten und wiederholten Lesen veranlassende Kratzer jeweils um einen definierten Winkel versetzt eingeritzt sind.

3. Kopierschutzverfahren nach einem der vorangehenden Ansprüche, **dadurch gekennzeichnet, daß** der zur Herstellung eines optischen Datenträgers verwandte Laser in seinen optischen Werten vom Standardwert variiert wird.

4. Kopierschutzverfahren nach Anspruch 3, **dadurch gekennzeichnet, daß** die Variation der optischen Werte des Lasers kontinuierlich in einem Zeitraum von einer Sekunde bis zu einer Minute bis zur völligen Unlesbarkeit der Daten verändert wird.

5. Kopierschutzverfahren nach einem der vorangehenden Ansprüche, **dadurch gekennzeichnet, daß** die Überprüfungsroutine zunächst eine größere Datenmenge in Bereichen des Datenträgers liest, die außerhalb des bestimmten Bereiches liegen.

6. Kopierschutzverfahren nach einem der vorangehenden Ansprüche, **dadurch gekennzeichnet, daß** die Mindestauslesedauer in Abhängigkeit der Auslesedauer der in den Bereichen des Datenträgers, die außerhalb des bestimmten Bereiches liegen, erfaßten Daten bestimmt wird.

7. Kopierschutzverfahren nach einem der vorangehenden Ansprüche, **dadurch gekennzeichnet, daß** die Überprüfungsroutine die Datenblöcke rückwärts liest.

8. Kopierschutzverfahren nach einem der vorangehenden Ansprüche, **dadurch gekennzeichnet, daß** weiter noch eine nicht korrigierbare Struktur auf den Datenträger eingeprägt ist.

## Claims

1. Copy protection method for a data carrier written with a program to be performed by a computer, particularly a CD-ROM or DVD-ROM, having the following steps:
- making interference structures in a specific area of the data carrier and
- provision of an inspection routine in the program applied to the data carrier and which
- brings about a polling of the specified area on the data carrier,
**characterized in that** the interference structures are correctable and bring about an increase in the reading time and the inspection routine,
- the reading time of said area is determined,
- the read-out time is compared with a predetermined, minimum read-out time and
- the program is broken off if the read-out time does not reach the minimum read-out time.

2. Copy protection method according to claim 1, **characterized in that** on a die of the data carrier, radial scratches, in each case displaced by a clearly defined angle, are made for fault correction of a read-out device for reconstructing the data and repeated reading.

3. Copy protection method according to one of the preceding claims, **characterized in that** the laser used for producing an optical data carrier is varied in its optical values from the standard value.

4. Copy protection method according to claim 3, **characterized in that** the variation of the optical values of the laser takes place continuously in a time period between 1 second and 1 minute up to the complete illegibility of the data.

5. Copy protection method according to one of the preceding claims, **characterized in that** the inspection routine initially reads a larger data quantity in areas of the data carrier located outside the specific area.

6. Copy protection method according to one of the preceding claims, **characterized in that** the minimum read-out time is determined as a function of the read-out time of the data detected in the areas of the data carrier located outside the specific area.

7. Copy protection method according to one of the preceding claims, **characterized in that** the inspection routine reads the data blocks backwards.

8. Copy protection method according to one of the preceding claims, **characterized in that** an uncorrectable structure is made on the data carrier.

## Revendications

1. Procédé de protection contre la reproduction pour un support de données sur lequel est écrit un programme à exécuter par un calculateur, en particulier un CD-ROM ou un DVD-ROM, comportant les étapes consistant à
- graver des structures perturbatrices dans une zone déterminée du support de données, et
- prévoir une routine de contrôle dans le programme appliqué sur le support de données, laquelle
- produit un appel de la zone déterminée sur le support de données,
**caractérisé par le fait que**
- les structures perturbatrices sont corrigeables et produisent une augmentation de la durée de lecture et la routine de contrôle saisit la durée de lecture de cette zone,
- compare cette durée de lecture à une durée minimale déterminée de lecture et
- interrompt le programme lorsque la durée de lecture n'atteint pas la durée minimale de lecture.

2. Procédé de protection contre la reproduction selon la revendication 1, **caractérisé par le fait que** sur une matrice du support de données sont gravées, décalées d'un angle défini, des rayures radiales qui amènent la correction d'erreurs d'un appareil de lecture pour la reconstruction des données et la lecture répétée.

3. Procédé de protection contre la reproduction selon l'une des revendications précédentes, **caractérisé par le fait que** le laser utilisé pour la réalisation d'un support de données optique est modifié dans ses valeurs optiques de la valeur normale.

4. Procédé de protection contre la reproduction selon la revendication 3, **caractérisé par le fait que** la variation des valeurs optiques du laser est modifiée de façon continue en un espace de temps d'une seconde à une minute jusqu'à illisibilité complète des données.

5. Procédé de protection contre la reproduction selon l'une des revendications précédentes, **caractérisé par le fait que** la routine de contrôle lit d'abord une plus grande quantité de données dans des zones du support de données qui sont en dehors de la zone déterminée.

6. Procédé de protection contre la reproduction selon l'une des revendications précédentes, **caractérisé par le fait que** la durée minimale de lecture est déterminée en fonction de la durée de lecture des données saisies dans les zones du support de données qui sont en dehors de la zone déterminée.

7. Procédé de protection contre la reproduction selon l'une des revendications précédentes, **caractérisé par le fait que** la routine de contrôle lit les blocs de données en arrière.

8. Procédé de protection contre la reproduction selon l'une des revendications précédentes, **caractérisé par le fait qu'**en outre encore une structure non corrigeable est gravéc sur le support de données.
